# EUROPÄISCHE PATENTSCHRIFT

(11) **EP 1 067 352 B1**
(45) Veröffentlichungstag und Bekanntmachung des Hinweises auf die Patenterteilung: **27.08.2003**
(21) Anmeldenummer: 00810566.0
(22) Anmeldetag: 29.06.2000
(51) Int. Cl.: F28F 9/22, F28F 13/06, B01F 5/06

(54) **Vorrichtung für den Wärmetausch**
Heat exchange device
Dispositif d'echange de chaleur

(30) Priorität: 07.07.1999 CH 124399
(43) Veröffentlichungstag der Anmeldung: 10.01.2001
(73) Patentinhaber: Fluitec Georg AG, 8404 Winterthur (CH)
(72) Erfinder: Hug, B., Dipl. Ing., 8408 Winterthur (CH); Altenburger, D., Dipl. Ing., 8545 Rickenbach (CH); Georg, A., Dipl. Ing., 8408 Winterthur (CH)
(74) Vertreter: Clerc, Natalia

(56) Entgegenhaltungen:
- DE-A- 2 410 292
- DE-A- 2 808 854
- "Heat exchange motionless mixer systems", Prospekt der Firma Statiflo International Limited.

## Beschreibung

Die Erfindung betrifft einen Strömungskanal gemäss Oberbegriff des Patenanspruchs 1. Sie betrifft insbesondere einen mit Einbauten versehenen Strömungskanal, der speziell bei hochviskosen Flüssigkeiten den Wärmeaustausch massiv verbessert und den Bau eines kompakten Wärmetauschers ermöglicht.

Derartige Vorrichtungen sind beispielsweise aus der Patentschrift DE 28 08 854 C3 bekannt. Diese Vorrichtung mischt hauptsächlich den Stoffstrom und wird nach üblichem Sprachgebrauch mit "statischem Mischer" bezeichnet. Das Umlenken der Stoffströme bewirkt an der Rohrwand eine Verbesserung des Wärmeüberganges. Die Doppelmantelkonstruktion wird jedoch sehr lang und der Druckverlust entsprechend hoch. Vermehrt werden statische Mischer auch im Rohrbündelwärmetauscher eingesetzt, wobei die hochviskose Flüssigkeit jeweils durch die vielen kleinen Rohre fliesst. Durch die Vielzahl der Rohre kann über das Verweilzeitspektrum jedoch keine sichere Aussage gemacht werden.

Aufgabe der Erfindung ist es, einen Kanal mit Einbauten derart auszubilden, dass der hochviskose Stoffstrom im Mantelraum eines speziell angeordneten Rohrbündels fliesst und dass statische Mischer im Rohrbündel platziert werden, welche eine ständige Oberflächenerneuerung am Rohrbündel und an der Rohrwand gewährleisten.

Die gestellte Aufgabe wird erfindungsgemäss durch die Merkmale des Anspruchs 1 gelöst.

In den Ansprüchen wird das Ausführungsbeispiel anhand der Zeichnungen näher erläutert. Es zeigt:

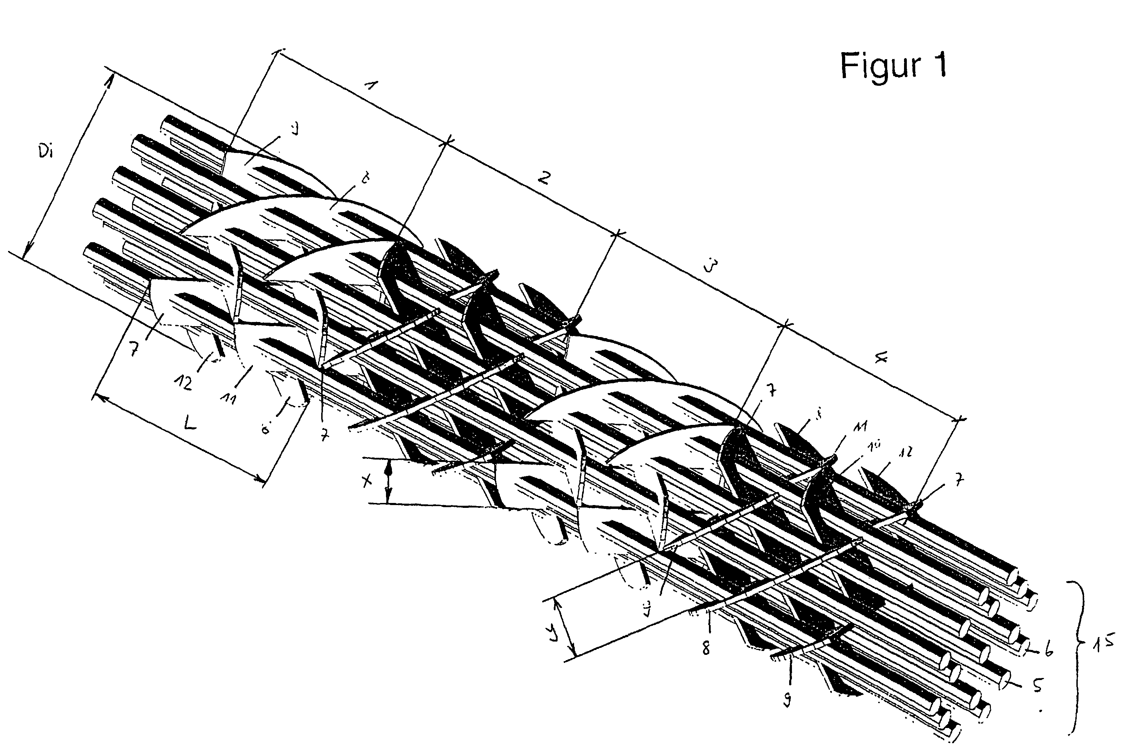

- Fig. 1: eine Raumdarstellung von vier Mischelementen mit Rohrbündel

Die erfindungsgemässe Vorrichtung zum Wärmeaustausch in einem Strömungskanal für strömende Medien weist gemäss Figur 1, mindestens ein Mischeinsatz (1,2,3,4) mit einem integrierten Rohrbündel (15) auf. Die Mischeinsätze (1,2,3,4) weisen 4 sich kreuzend hindurchreichende Stegplatten (7,8) und 8 gekürzte sich kreuzende Stegplatten (9,10,11,12) auf. Das Verhältnis der maximalen Stegbreite (x) zum Rohrdurchmesser (Di) beträgt 0.25 und das Verhältnis der Länge (L) eines Mischelementes zum Rohrdurchmesser (Di) beträgt 0.8 bis 1.2 und der Winkel der Stegplatten zur Rohrachse beträgt 42° bis 48°. Zusätzlich weist das Verhältnis des senkrechten Abstandes (y) in jedem Mischeinsatz (1,2,3,4) zum Rohrdurchmesser (Di) einen Wert von 0.2 bis 0.4 auf. Die Mischeinsätze (1,2,3,4) sind im Strömungskanal hintereinander angeordnet, wobei die aneinander grenzenden Elemente bezüglich der Rohrachse um einen Winkel von 90° gegeneinander verdreht sind. Die Mischeinsätze besitzen Ellipsen, in welche man mindestens ein Rohr (5,6) als Rohrbündel (15) einschiebt und am Mischeinsatz befestigt.

## Patentansprüche

1. Strömungskanal für einen Wärmeaustausch, **dadurch gekennzeichnet, dass** er mindestens einen Mischeinsatz (1,2,3,4) mit einem Rohrbündel (15) bestehend aus Rohren (5,6) und mit vier paarweise gekreuzt angeordneten ersten Stegplatten (7,8) und acht gekürzten, paarweise gekreuzt angeordneten zweiten Stegplatten (9,10,11,12) aufweist, wobei die ersten Stegplatten (7,8) durch das Rohrbündel (15) hindurchreichen, und dass das Verhältnis der maximalen Stegbreite (x) zum in Figur 1 definierten Rohrdurchmesser (Di) 0.25 beträgt und dass das Verhältnis der Länge (L) des Mischeinsatzes (1,2,3,4) zum Rohrdurchmesser (Di) 0.8 bis 1.2 beträgt und dass der Winkel der Stegplatten (7,8,9,10,11,12) zur Rohrachse 42° bis 48° beziehungsweise 138° bis 132° beträgt und dass das Verhältnis des in Figur 1 definierten senkrechten Stegabstandes (y) zwischen zwei benachbarten Stegplatten (7,8,9,10,11,12) gleicher Richtung zum Rohrdurchmesser (Di) einen Wert von 0.2 bis 0.4 aufweist und dass die Stepplatten (7,8,9,10,11,12) Ellipsen besitzen, in welche man die Rohre (5,6) einschiebt, wobei die Rohre (5,6) an den Stegplatten (7,8,9,10,11,12) befestigt sind.

2. Strömungskanal nach Anspruch 1, **dadurch gekennzeichnet, dass** mehrere Mischeinsätze (1,2,3,4) vorhanden sind und dass sie im Strömungskanal hintereinander angeordnet sind, wobei aneinander grenzende Mischeinsätze (1,2,3,4) bezüglich der Rohrachse um einem Winkel von 90° gegeneinander verdreht sind.

3. Strömungskanal nach Anspruch 1, **dadurch gekennzeichnet, dass** mehrere Mischeinsätze (1,2,3,4) vorhanden sind und dass sie im Strömungskanal hintereinander mit Rohrabständen der maximal dreifachen Länge (L) angeordnet sind, wobei die Mischeinsätze (1,2,3,4) nach dem Leerrohrabstand um einem Winkel von 90° gegeneinander verdreht sind.

4. Strömungskanal nach Anspruch 1, **dadurch gekennzeichnet, dass** der mindestens eine Mischeinsatz (1,2,3,4) maximal acht erste Stegplatten (7,8) und maximal sechzehn zweite Stegplatten (9,10,11,12) aufweist, wobei das Verhältnis der Stegbreite (x) zum Rohrdurchmesser (Di) entsprechend angepasst wird.

5. Strömungskanal nach Anspruch 1, **dadurch gekennzeichnet, dass** die Rohre (5,6) des Rohrbündels (15) frei positionierbar sind.

6. Strömungskanal nach Anspruch 1, **dadurch gekennzeichnet, dass** die Stegplatten (7,8,9,10,11,12) an das Rohrbündel (15) gelötet sind.

7. Strömungskanal nach Anspruch 1, **dadurch gekennzeichnet, dass** zwei der ersten Stegplatten (8) am äusseren Mantel des Rohrbündels (15) angeordnet ist, wobei sie an gegenüberliegenden Seiten angeordnet sind und sich in Achsrichtung des Rohrbündels (15) im mittleren Bereich des Mischeinsatzes (1,2;3,4) kreuzen, und dass die zwei anderen der ersten Stegplatten (7) im mittleren Bereich des Rohrbündels (15) angeordnet sind, wobei sie sich in Achsrichtung des Rohrbündels (15) im mittleren Bereich des Mischeinsatzes (1,2,3,4) kreuzen.

8. Strömungskanal nach Anspruch 1, **dadurch gekennzeichnet, dass** jeder erste Stegplatte (7,8) zwei zweite Stegplatten (9,10) zugeordnet sind, welche gleich ausgerichtet sind wie die zugehörige erste Stegplatte (7,8) und dass der Abstand jeder zweiten Stegplatte (9,10) zur zugehörigen ersten Stegplatte (7,8) der senkrechte Stegabstand (y) ist.

9. Strömungskanal nach Anspruch 1, **dadurch gekennzeichnet, dass** die dem Rohrbündel (15) vorstehenden Teile der Stegplatten (7,8,9,10) Kanten aufweisen, welche als Abschnitt eines Kreises ausgebildet sind, wobei sie gemeinsam einen durchsetzten Kreis bilden, dessen Durchmesser dem Rohrdurchmesser (Di) entspricht.

10. Strömungskanal nach Anspruch 1, **dadurch gekennzeichnet, dass** jede Stegplatte (7,8,9,10) von mehreren Rohre (5,6) durchsetzt ist, wobei jede Stegplatten (7,8,9,10) einen Teil der Rohre (5,6) ganz und einen Teil der Rohre (5,6) teilweise umschliesst.

## Claims

1. Flow duct for heat exchange, **characterized in that** it has at least one mixing insert (1, 2, 3, 4) with a tube bundle (15) consisting of tubes (5, 6), and with four first web plates (7, 8) arranged, crossed in pairs, and eight shortened second web plates (9, 10, 11, 12) arranged, crossed in pairs, the first web plates (7, 8) extending through the tube bundle (15), and **in that** the ratio of the maximum web width (x) to the tube diameter (Di) defined in Figure 1 is 0.25, and **in that** the ratio of the length (L) of the mixing insert (1, 2, 3, 4) to the tube diameter (Di) is 0.8 to 1.2, and **in that** the angle of the web plates (7, 8, 9, 10, 11, 12) to the tube axis is 42° to 48° or 138° to 132°, and **in that** the ratio of the vertical web distance (y), defined in Figure 1, between two adjacent web plates (7, 8, 9, 10, 11, 12) of the same direction to the tube diameter (Di) has a value of 0.2 to 0.4, and **in that** the web plates (7, 8, 9, 10, 11, 12) possess ellipses, into which the tubes (5, 6) are pushed, the tubes (5, 6) being fastened to the web plates (7, 8, 9, 10, 11, 12).

2. Flow duct according to Claim 1, **characterized in that** a plurality of mixing inserts (1, 2, 3, 4) are present, and **in that** they are arranged one behind the other in the flow duct, mixing inserts (1, 2, 3, 4) contiguous to one another being rotated at an angle of 90° to one another with respect to the tube axis.

3. Flow duct according to Claim 1, **characterized in that** a plurality of mixing inserts (1, 2, 3, 4) are present, and **in that** they are arranged one behind the other in the flow duct with distances between tubes which corresponds to the maximum threefold length (L), the mixing inserts (1, 2, 3, 4) being rotated at an angle of 90° to one another according to the distance between empty tubes.

4. Flow duct according to Claim 1, **characterized in that** the at least one mixing insert (1, 2, 3, 4) has a maximum of eight first web plates (7, 8) and a maximum of sixteen second web plates (9, 10, 11, 12), the ratio of the web width (x) to the tube diameter (Di) being adapted correspondingly.

5. Flow duct according to Claim 1, **characterized in that** the tubes (5, 6) of the tube bundle (15) can be freely positioned.

6. Flow duct according to Claim 1, **characterized in that** the web plates (7, 8, 9, 10, 11, 12) are soldered to the tube bundle (15).

7. Flow duct according to Claim 1, **characterized in that** two of the first web plates (8) are arranged on the outer casing of the tube bundle (15), the said first web plates being arranged on opposite sides and crossing one another in the axial direction of the tube bundle (15) in the middle region of the mixing insert (1, 2; 3, 4), and **in that** the other two of the first web plates (7) are arranged in the middle region of the tube bundle (15), at the same time crossing one another in the axial direction of the tube bundle (15) in the middle region of the mixing insert (1, 2, 3, 4).

8. Flow duct according to Claim 1, **characterized in that** each first web plate (7, 8) is assigned two second web plates (9, 10) which are oriented in the same way as the associated first web plate (7, 8), and **in that** the distance of every second web plate (9, 10) to the associated first web plate (7, 8) is the vertical web distance (y).

9. Flow duct according to Claim 1, **characterized in that** those parts of the web plates (7, 8, 9, 10) which project beyond the tube bundle (15) have edges which are designed as a segment of a circle, the said edges together forming a continuous circle, the diameter of which corresponds to the tube diameter (Di).

10. Flow duct according to Claim 1, **characterized in that** each web plate (7, 8, 9, 10) has a plurality of tubes (5, 6) passing through it, each web plate (7, 8, 9, 10) surrounding some of the tubes (5, 6) completely and some of the tubes (5, 6) partially.

## Revendications

1. Canal d'écoulement pour un échange de chaleur, **caractérisé en ce qu'**il présente au moins un dispositif de mélange (1, 2, 3, 4) avec un faisceau de tubes (15) se composant de tubes (5, 6) et avec quatre premières plaques nervurées (7, 8) disposées de manière croisée par paires et huit deuxièmes plaques nervurées (9, 10, 11, 12) raccourcies disposées de manière croisée par paires, les premières plaques nervurées (7, 8) passant à travers le faisceau de tubes (15) et **en ce que** le rapport de la largeur maximale des nervures (x) au diamètre des tubes (Di) défini dans la figure 1 est de 0,25 et **en ce que** le rapport de la longueur (L) du dispositif de mélange (1, 2, 3, 4) au diamètre des tube (Di) est de 0,8 à 1,2 et **en ce que** l'angle des plaques nervurées (7, 8, 9, 10, 11, 12) par rapport à l'axe des tubes est de 42° à 48°, respectivement de 138° à 132° et **en ce que** le rapport de la distance perpendiculaire des nervures (y) définie dans la figure 1 entre deux plaques nervurées voisines (7, 8, 9, 10, 11, 12) de même sens par rapport au diamètre des tubes (Di) présente une valeur de 0,2 à 0,4 et **en ce que** les plaques nervurées (7, 8, 9, 10, 11, 12) possèdent des ellipses dans lesquelles on enfonce les tubes (5, 6), les tubes (5, 6) étant fixés aux plaques nervurées (7, 8, 9, 10, 11, 12).

2. Canal d'écoulement selon la revendication 1, **caractérisé en ce que** plusieurs dispositifs de mélange (1, 2, 3, 4) sont prévus et **en ce qu'**ils sont disposés les uns derrière les autres dans le canal d'écoulement, les dispositifs de mélange adjacents (1, 2, 3, 4) étant tournés les uns par rapport aux autres d'un angle de 90° par rapport à l'axe des tubes.

3. Canal d'écoulement selon la revendication 1, **caractérisé en ce que** plusieurs dispositifs de mélange (1, 2, 3, 4) sont prévus et **en ce qu'**ils sont disposés les uns derrière les autres dans le canal d'écoulement avec des distances entre les tubes d'au maximum trois fois la longueur (L), les dispositifs de mélange (1, 2, 3, 4) étant tournés les uns par rapport aux autres d'un angle de 90° en fonction de la distance entre les tubes vides.

4. Canal d'écoulement selon la revendication 1, **caractérisé en ce que** l'au moins un dispositif de mélange (1, 2, 3, 4) présente au maximum huit premières plaques nervurées (7, 8) et au maximum seize deuxièmes plaques nervurées (9, 10, 11, 12), le rapport de la largeur des nervures (x) au diamètre des tubes (Di) étant adapté en conséquence.

5. Canal d'écoulement selon la revendication 1, **caractérisé en ce que** les tubes (5, 6) du faisceau de tubes (15) peuvent être positionnés librement.

6. Canal d'écoulement selon la revendication 1, **caractérisé en ce que** les plaques nervurées (7, 8, 9, 10, 11 ,12) sont soudées au faisceau de tubes (15).

7. Canal d'écoulement selon la revendication 1, **caractérisé en ce que** deux des premières plaques nervurées (8) sont disposées sur l'enveloppe extérieure du faisceau de tubes (15), celles-ci étant disposées sur des côtés opposés et se croisant dans la direction axiale du faisceau de tubes (15) dans la région centrale du dispositif de mélange (1, 2, 3, 4), et **en ce que** les deux autres des premières plaques nervurées (7) sont disposées dans la région centrale du faisceau de tubes (15), celles-ci se croisant dans la direction axiale du faisceau de tubes (15) dans la région centrale du dispositif de mélange (1, 2, 3, 4).

8. Canal d'écoulement selon la revendication 1, **caractérisé en ce que** deux deuxièmes plaques nervurées (9, 10) sont associées à chaque première plaque nervurée (7, 8), celles-ci étant orientées dans le même sens que la première plaque nervurée associée (7, 8) et **en ce que** la distance de chaque deuxième plaque nervurée (9, 10) à la première plaque nervurée associée (7, 8) est la distance perpendiculaire des nervures (y).

9. Canal d'écoulement selon la revendication 1, **caractérisé en ce que** les parties des plaques nervurées (7, 8, 9, 10) dépassant du faisceau de tubes (15) présentent des arêtes qui sont réalisées sous forme de portion de cercle, celles-ci formant conjointement un cercle traversé, dont le diamètre correspond au diamètre des tubes (Di).

10. Canal d'écoulement selon la revendication 1, **caractérisé en ce que** chaque plaque nervurée (7, 8, 9, 10) est traversée par plusieurs tubes (5, 6), chaque plaque nervurée (7, 8, 9, 10) entourant complètement une partie des tubes (5, 6) et partiellement une partie des tubes (5, 6).
